# EUROPÄISCHE PATENTSCHRIFT

(11) **EP 2 443 008 B1**
(45) Veröffentlichungstag und Bekanntmachung des Hinweises auf die Patenterteilung: **13.06.2018**
(21) Anmeldenummer: 10714284.6
(22) Anmeldetag: 20.04.2010
(51) Int. Cl.: B60S 1/34

(54) **BEFESTIGUNGSELEMENT ZUR AUFNAHME EINES WISCHERARMES**
FIXATION ELEMENT FOR A WIPERARM
ELEMENT DE FIXATION D'UN BRAS D'ESSUIE GLACE

(30) Priorität: 17.06.2009 DE 102009027005
(43) Veröffentlichungstag der Anmeldung: 25.04.2012
(73) Patentinhaber: Robert Bosch GmbH, 70442 Stuttgart (DE)
(72) Erfinder: RITT, Jean-Marc, F-67000 Strasbourg (FR)
(86) Internationale Anmeldenummer: PCT/EP2010/055160
(87) Internationale Veröffentlichungsnummer: WO 2010/145864

(56) Entgegenhaltungen:
- EP-A2- 1 486 389
- WO-A1-93/11978
- GB-A- 2 311 209

## Beschreibung

Die vorliegende Erfindung betrifft ein Befestigungselement zur Aufnahme eines Wischerarmes, insbesondere für eine Scheibenwischervorrichtung eines Kraftfahrzeuges.

### Stand der Technik

Es sind zahlreiche Scheibenwischervorrichtungen für Kraftfahrzeuge bekannt, beispielsweise aus DE 101 26 258 A1. Diese Scheibenwischervorrichtungen weisen ein Befestigungselement auf, welches an einem Ende mit einem Gelenkteil eines Wischerarmes kippbar verbunden ist. An dem Wischerarm ist ein Wischblatt befestigt. Das andere Ende des Befestigungselementes ist mit einer an einem Ende konisch ausgestalteten Scheibenwischerwelle verbunden und ermöglicht so die Übertragung einer Pendelbewegung der Welle auf das Wischerblatt. Das Befestigungsteil ist dabei als tiefgezogenes Blechteil ausgebildet.

Aus WO 93/11978 A1 ist ein Wischarm mit einem aus einem Blech gefertigten Befestigungsteil bekannt, das eine Bohrung zur drehfesten Fixierung auf einer Wischerwelle aufweist und zumindest um die Bohrung herum einen oberen Blechabschnitt und einen einstückig mit diesem verbundenen und etwa parallel zu diesem liegenden unteren Blechabschnitt aufweist. Um dem Befestigungsteil im Bereich der Bohrung eine hohe Formstabilität zu geben, ist ein Blechabschnitt um die Bohrung herum im Abstand zur bei Betrachtung in Richtung der Achse der Bohrung erkennbaren Aussenkontur des Befestigungsteils gegen eine Flachseite des anderen Blechabschnitts abgestützt.

Nachteilig bei einer derartigen Ausgestaltung des Befestigungselementes als tiefgezogenes Blechteil sind die hohen Kosten durch den aufwändigen Herstellungsprozess.

Es ist die Aufgabe der Erfindung ein Befestigungselement mit verringerten Herstellungskosten und einem vereinfachten Herstellungsprozess zu schaffen, das ein Übertragen der Pendelbewegung der Welle auf das Wischerblatt ermöglicht.

Die Lösung der Aufgabe erfolgt erfindungsgemäß durch die Merkmale des Anspruch 1. Vorteilhafte Ausgestaltungen der Erfindung sind in den Unteransprüchen angegeben.

### Offenbarung der Erfindung

Das erfindungsgemäße Befestigungselement zur Aufnahme eines Wischerarmes, insbesondere für eine Scheibenwischvorrichtung eines Kraftfahrzeuges, umfasst einen Aufnahmebereich zur Aufnahme des Wischerarmes, und einen Verbindungsbereich zur Verbindung des Befestigungselementes mit einer Welle, wobei der Verbindungsbereich eine konisch ausgeformte Öffnung zur Aufnahme eines konisch ausgebildeten Wellenendes aufweist, wobei die Öffnung innerhalb eines aus mindestens einer ersten Blechlage und mindestens einer zweiten Blechlage gebildeten Bereiches ausgebildet ist. Erfindungsgemäß weist das Befestigungselement zwei Seitenflächen auf, wobei die zweite Blechlage mit den Seitenflächen sowohl im Aufnahmebereich als auch im Verbindungsbereich verbunden ist.

Das erfindungsgemäße Befestigungselement kann dabei aus einem Blechband hergestellt werden, oder aus einem Blech ausgeschnitten werden, und anschließend durch Umformen, beispielsweise durch Biegen, in die gewünschte Form gebracht werden. Durch die Verwendung beispielsweise einer zweiten Lage Blech in dem Verbindungsbereich kann die Dicke des Befestigungselementes in dem Bereich erhöht werden. Dadurch ist die Ausbildung einer Öffnung mittels Durchlochen der ersten und der zweiten Blechlage möglich, wobei die Öffnung konisch ausgestaltet sein kann, um das konisch ausgestaltete Ende einer Welle, beispielsweise die Welle eines Scheibenwischerantriebes, innerhalb der Öffnung aufnehmen zu können. Die Öffnung kann beispielsweise vor der Montage in die jeweilige Blechlage eingebracht werden, oder nach der Montage der Blechlagen zeitgleich in beiden Blechlagen ausgeformt werden. Das Durchlochen kann beispielsweise erfolgen mittels Lasern oder Stanzen. Die Öffnung kann zur Erhöhung der Toleranzgenauigkeit auf Maß kalibriert werden. Durch die Erhöhung der Dicke des Befestigungselementes in dem Verbindungsbereich wird die Innenfläche der Öffnung vergrößert, wodurch die Kontaktfläche, die das konische Ende der Welle kontaktiert, vergrößert wird. Dadurch ist die Übertragung einer größeren Kraft von der Welle auf das Befestigungsteil und damit auf den Wischerarm möglich.

Die zur Kraftübertragung und sicheren Befestigung des Wischerarmes benötigte Dicke des Befestigungsteils kann beispielsweise auch durch drei oder mehr Blechlagen erreicht werden. Durch die erfindungsgemäße Ausgestaltung des Befestigungselementes wird die Form des Befestigungselementes vereinfacht. Die Verwendung von Blech, das ausgeschnitten und, beispielsweise durch Biegen, in die gewünschte Form umgeformt wird, kann der Herstellungsprozess des Befestigungselementes vereinfacht werden, wodurch beispielweise die Werkzeugkosten gesenkt werden können. Dies ermöglicht eine vereinfachten Fertigung und vermindert die Kosten für die Herstellung des Befestigungselementes.

In einer bevorzugten Ausführungsform des Befestigungselementes sind die erste Blechlage und die zweite Blechlage durch ein um mindestens einmal um 180 Grad gebogenes Blech gebildet, wobei das Blech innerhalb des Verbindungsbereiches gebogen ist. Die zweite Blechlage kann beim Ausschneiden der Öffnung in derselben Ebene des Bleches liegen wie die erste Lage. Nach dem Ausschneiden kann die zweite Blechlage, beispielsweise in Form eines Blechstreifens, der mit dem ersten Blechstreifen verbunden ist, ausgebildet sein. Vorteilhaft an dieser Ausgestaltung ist, dass der Blechstreifen zum Beispiel einmal um 180 Grad umgebogen werden kann, um die zweite Blechlage zu bilden, und dadurch im Wesentlichen parallel zur ersten Blechlage angeordnet ist. Die zweite Blechlage kann dabei sowohl nach unten, zur Unterseite des Befestigungselementes, in Richtung der Welle, als auch nach oben, zur Oberseite des Befestigungselementes, von der Welle weg, umgebogen werden. Zur Erreichung einer stärkeren Dicke des Befestigungselementes im Verbindungsbereich kann der Blechstreifen mehrfach, beispielsweise zweimal oder dreimal um 180 Grad, umgebogen werden.

In einer besonders bevorzugten Ausführungsform ist die erste Blechlage auf einer Oberseite des Befestigungselementes und die zweite Blechlage auf einer Unterseite des Befestigungselementes vorgesehen, wobei die Öffnung im Bereich der ersten Blechlage einen kleineren Durchmesser aufweist als im Bereich der zweiten Blechlage. Die Oberseite ist die Seite des Befestigungselementes, die der Schraubenmutter zugewandt ist. Die Unterseite ist die im montierten Zustand der Welle an dem Befestigungselement vorgesehenen Mutter abgewandten Seite. Dadurch, dass die erste Blechlage, die an der Oberseite angeordnet ist, einen kleineren Durchmesser aufweist als die zweite Blechlage an der Unterseite, kann das konische Ende der Welle in die Öffnung derart aufgenommen werden, dass ein fester Sitz gewährleistet ist. Das konische Ende der Welle kann dabei einen Gewindefortsatz aufweisen, der in axialer Richtung der Welle durch die Öffnung des Befestigungselementes über die Oberfläche hinaus hindurchragt. Auf diesem Gewindefortsatz der Welle kann eine Schraubenmutter angebracht werden. In montiertem Zustand liegt die Schraubenmutter an der Oberfläche des Befestigungselementes an und kann eine Zugkraft auf die Welle aufbringen, die die Welle in die konische Öffnung hineinpresst und die Welle festsetzt.

In einer bevorzugten Ausführungsform ist die erste Blechlage im Bereich der Öffnung derart ausgebildet, dass die Blechlage einen Versatz aufweist. Der Versatz kann beispielsweise als ringförmige Stufe um die Öffnung herum ausgebildet sein. Der Versatz kann als Vertiefung in der ersten Blechlage, zur Unterseite hin, ausgestaltet sein. Die Vertiefung kann durch eine Reduzierung der dicke der ersten Blechlage ausgebildet werden, oder durch Umformen der ersten Blechlage bei im Wesentlichen gleichbleibender Blechdicke der Blechlage. Vorteilhaft ist dabei, dass zwischen der Unterseite der Schraubenmutter und dem Anfang des konischen Wellenendes ein Abstand verbleibt. Wegen der fertigungstechnisch bedingten Toleranzabweichungen bei der konischen Öffnung und bei dem konischen Wellenende kann die relative Position zwischen dem konischen Wellenende und der Öffnung variieren. Der Abstand hat den Vorteil, dass die Schraubenmutter nicht gegen den die konische Fläche der Welle stoßen kann. Dadurch ist auch bei einer ungünstigen Toleranzpaarung eine hinreichend große Pressung zwischen Befestigungselement und Welle gewährleistet.

In einer bevorzugten Ausführungsform erstreckt sich die zweite Blechlage in den Aufnahmebereich. Dies hat den Vorteil, dass die zweite Blechlage den Aufnahmebereich verstärken kann, beispielsweise gegen Kräfte, die den Aufnahmebereich zusammendrücken.

In einer besonders bevorzugten Ausführungsform weist der Aufnahmebereich mindestens zwei abgekantete Seitenflächen auf, wobei die zweite Blechlage mit den Seitenflächen verbunden ist. Das Befestigungselement kann zwei Seitenflächen aufweisen, die im Wesentlichen rechtwinklig zur Oberfläche des Befestigungselementes ausgebildet sind und sich entlang des Verbindungsbereiches und des Aufnahmebereiches erstrecken. Die Seitenflächen können beispielsweise durch Abkanten des Bleches erzeugt werden. Die Seitenflächen im Aufnahmebereich können höher ausgebildet sein als im Verbindungsbereich und weisen Aussparungen zur kippbaren Aufnahme des Wischerarmes auf. Nach der Erfindung ist die zweite Blechlage mit den Seitenflächen sowohl im Aufnahmebereich als auch im Verbindungsbereich verbunden. Dadurch wird eine Verstärkung des Bereiches erreicht, die Zug- und Druckkräfte übertragen kann.

In einer besonders bevorzugten Ausführungsform ist die zweite Blechlage mit den Seitenflächen formschlüssig verbunden. Die zweite Blechlage kann im Aufnahmebereich an jeder Seite einen seitlich ausgebildeten Fortsatz aufweisen, der in eine angepasste Ausnehmung in der jeweiligen Seitenfläche aufgenommen werden kann. Der seitliche Fortsatz kann auch durch eine Presspassung mit der Seitenfläche verbunden werden. Dies ermöglicht eine kostengünstige, einfach herzustellende Verbindung zwischen der zweiten Blechlage und den Seitenfläche, welche die Stabilität des Befestigungselementes erhöht.

In einer besonders bevorzugten Ausführungsform weist die zweite Blechlage eine Aussparung zur Befestigung eines Spannelementes auf. Die Aussparung kann in Form einer durch die zweite Blechlage hindurchreichenden Öffnung ausgestaltet sein. Die Integration der Aussparung in die zweite Blechlage ermöglicht eine kostengünstige Befestigung des Spannelementes an dem Befestigungselement. Das Spannelement kann beispielsweise in Form einer Feder ausgestaltet sein, die mit dem Befestigungselement und dem Wischerarm verbunden ist.

Die Erfindung betrifft ferner ein Fahrzeug mit einem wie vorstehend aus- und weitergebildeten Befestigungselement für eine Scheibenwischvorrichtung.

Nachfolgend wird die Erfindung unter Bezugnahme auf die anliegenden Zeichnungen anhand bevorzugter Ausführungsbeispiele näher erläutert.

Es zeigen:
- Fig. 1:: eine schematische perspektivische Draufsicht eines Befestigungselementes;
- Fig. 2:: eine schematische perspektivische Unteransicht des in Fig. 1 gezeigten Befestigungselementes; und
- Fig. 3:: eine schematische Darstellung einer Seitenansicht des in Fig. 1 gezeigten Befestigungselementes mit einer an dem Befestigungselement angeordneten Welle.

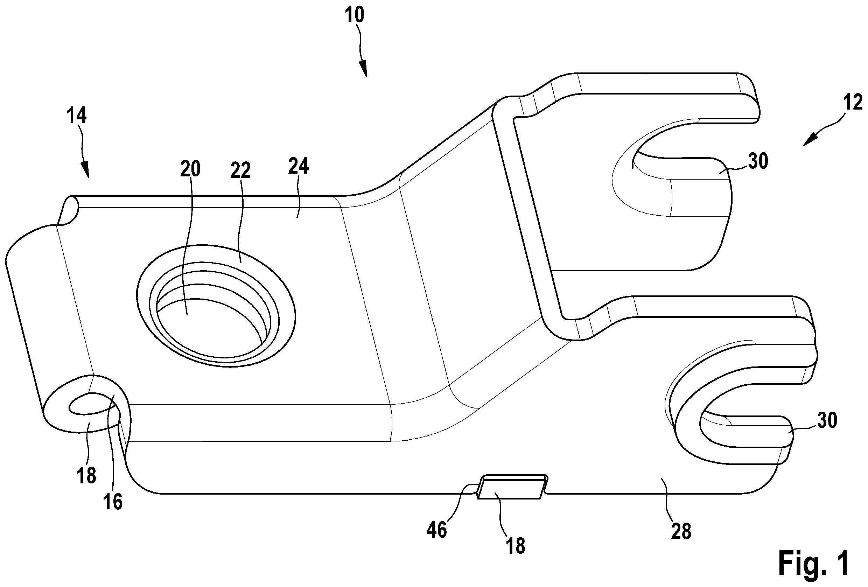

Das in Fig. 1 dargestellte Befestigungselement 10 weist einen Aufnahmebereich 12 und einen Verbindungsbereich 14 auf. Der Verbindungsbereich 14 wird durch eine erste Blechlage 16 und eine um 180 Grad nach unten umgebogene zweite Blechlage 18 gebildet. Durch die erste Blechlage 16 und die zweite Blechlage 18 hindurch ist eine konisch ausgestaltete Öffnung 20 ausgeformt, die einen ringförmigen Versatz 22 aufweist. Die Oberfläche des Versatzes 22 ist dabei tiefer angeordnet als die Oberfläche 24 des Befestigungselementes 10. Entlang des Aufnahmebereiches 12 und des Verbindungsbereiches 14 erstrecken sich an jeder Seite je eine Seitenfläche 28, die im Wesentlichen rechtwinklig zur Oberseite 24 angeordnet sind. Die Seitenflächen 28 weisen jeweils eine Lagerung 30 zur Aufnahme eines Wischerarmes auf. Die zweite Blechlage 18 ist dabei mit beiden Seitenflächen 28 formschlüssig verbunden, wobei hierfür an den Seitenflächen 28 jeweils eine Ausnehmung 46 vorgesehen sein kann, in welche die zweite Blechlage 18 eingreifen kann.

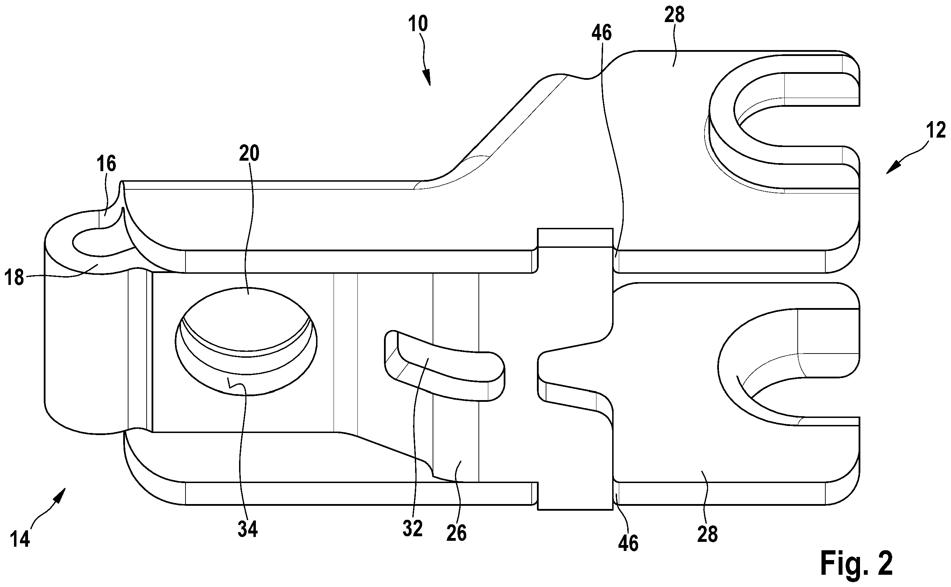

Fig. 2 zeigt die um 180 Grad nach unten zur Unterseite 26 hin umgebogenen zweite Blechlage 18, die im Bereich der konisch ausgeformten Öffnung 20 im Wesentlichen parallel zur ersten Blechlage 16 angeordnet ist. Die zweite Blechlage 18 erstreckt sich bis in den Aufnahmebereich 12 und ist beidseitig formschlüssig mit den Seitenflächen 28 verbunden. In der zweiten Blechlage 18 ist eine Aussparung 32 zur Aufnahme eines Spannelementes 44 ausgestaltet. Die konisch ausgeformte Öffnung 20 weist an ihrer Innenseite eine Kontaktfläche 34 zur Kontaktierung eines konischen Wellenendes 36 auf.

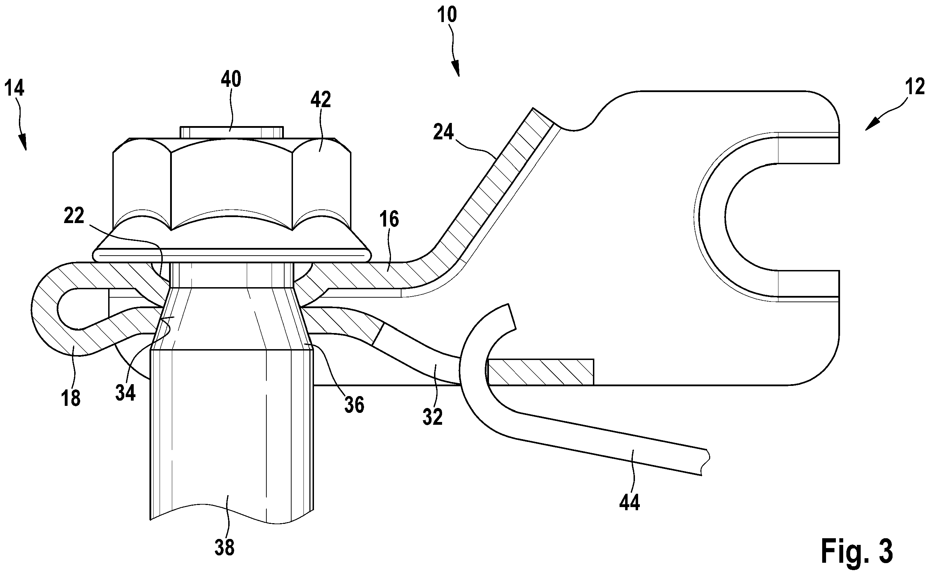

Die konisch ausgeformte Öffnung 20 in der ersten Blechlage 16 und der zweite Blechlage 18 (Fig. 3) dient der Aufnahme eines konischen Wellenendes 36 einer Scheibenwischerwelle 38. Das konische Wellenende 36 liegt an der Kontaktfläche 34 der Öffnung 20 an. Ein Gewindefortsatz 40 der Welle 38 ragt durch die Öffnung 20 hindurch. Mit dem Gewindefortsatz 40 ist eine Schraubenmutter 42 verbunden, die mit ihrer Unterseite die Oberseite 24 des Befestigungselementes 10 berührt. Durch den Versatz 22 sind die Schraubenmutter 42 und das konische Wellenende 36 voneinander beabstandet. Dadurch ist auch bei ungünstigen Toleranzpaaren, beispielsweise dem größten Öffnungsdurchmesser und dem kleinsten Wellendurchmesser, das Aufbringen einer ausreichenden Anpresskraft sichergestellt. Der Versatz ist hierbei derart ausgestaltet, dass die erste Blechlage 16 bei im Wesentlichen gleichbleibender Blechdicke ungeformt wurde. In die Aussparung 32 in der zweiten Blechlage 18 ist ein Spannelement 44 in Form einer Feder eingehakt.

## Patentansprüche

1. Befestigungselement zur Aufnahme eines Wischerarmes, insbesondere für eine Scheibenwischvorrichtung eines Kraftfahrzeuges,
umfassend einen Aufnahmebereich (12) zur Aufnahme des Wischerarmes, und einen Verbindungsbereich (14) zur Verbindung des Befestigungselementes (10) mit einer Welle (38), wobei der Verbindungsbereich (14) eine konisch ausgeformte Öffnung (20) zur Aufnahme eines konisch ausgebildeten Wellenendes (36) aufweist, wobei die Öffnung (20) innerhalb eines aus mindestens einer ersten Blechlage (16) und mindestens einer zweiten Blechlage (18) gebildeten Bereiches ausgebildet ist,
**dadurch gekennzeichnet, dass**
das Befestigungselement (10) zwei Seitenflächen (28) aufweist, wobei die zweite Blechlage (18) mit den Seitenflächen (28) sowohl im Aufnahmebereich (12) als auch im Verbindungsbereich (14) verbunden ist.

2. Befestigungselement nach Anspruch 1, **dadurch gekennzeichnet, dass** die erste Blechlage (16) und die zweite Blechlage (18) durch ein um mindestens einmal um 180 Grad gebogenes Blech gebildet sind, wobei das Blech innerhalb des Verbindungsbereiches (14) gebogen ist.

3. Befestigungselement nach Anspruch 1 oder 2, **dadurch gekennzeichnet, dass** die erste Blechlage (16) auf einer Oberseite (24) des Befestigungselementes (10) und die zweite Blechlage (18) auf einer Unterseite (26) des Befestigungselementes (10) vorgesehen ist, wobei die Öffnung (20) im Bereich der ersten Blechlage (16) einen kleineren Durchmesser aufweist als im Bereich der zweiten Blechlage (18).

4. Befestigungselement nach einem der Ansprüche 1 bis 3, **dadurch gekennzeichnet, dass** die erste Blechlage (16) im Bereich der Öffnung (20) derart ausgebildet ist, dass die Blechlage (16) einen Versatz (22) aufweist.

5. Befestigungselement nach einem der Ansprüche 1 bis 4, **dadurch gekennzeichnet, dass** sich die zweite Blechlage (18) in den Aufnahmebereich (12) erstreckt.

6. Befestigungselement nach Anspruch 5, **dadurch gekennzeichnet, dass** der Aufnahmebereich (12) mindestens zwei abgekantete Seitenflächen (28) aufweist, wobei die zweite Blechlage (18) mit den Seitenflächen (28) verbunden ist.

7. Befestigungselement nach einem der Ansprüche 1 bis 6, **dadurch gekennzeichnet, dass** die zweite Blechlage (18) mit den Seitenflächen (28) formschlüssig verbunden ist.

8. Befestigungselement nach einem der Ansprüche 1 bis 7, **dadurch gekennzeichnet, dass** die zweite Blechlage (18) eine Aussparung (32) zur Befestigung eines Spannelementes (34) aufweist.

9. Fahrzeug mit einem Befestigungselement (10) für eine Scheibenwischvorrichtung nach einem der Ansprüche 1 bis 8.

## Claims

1. Fastening element for receiving a wiper arm, in particular for a window-wiping device of a motor vehicle, comprising a receiving region (12) for receiving the wiper arm, and a connecting region (14) for connecting the fastening element (10) to a shaft (38), wherein the connecting region (14) has a conically shaped opening (20) for receiving a conically shaped shaft end (36), wherein the opening (20) is formed within a region formed from at least one first sheet metal layer (16) and at least one second sheet metal layer (18),
**characterized in that**
the fastening element (10) has two side faces (28), wherein the second sheet metal layer (18) is connected to the side faces (28) both in the receiving region (12) and in the connecting region (14) .

2. Fastening element according to Claim 1, **characterized in that** the first sheet metal layer (16) and the second sheet metal layer (18) are formed by a metal sheet which is bent at least once through 180 degrees, wherein the metal sheet is bent within the connecting region (14).

3. Fastening element according to Claim 1 or 2, **characterized in that** the first sheet metal layer (16) is provided on an upper side (24) of the fastening element (10), and the second sheet metal layer (18) is provided on a lower side (26) of the fastening element (10), wherein the opening (20) in the region of the first sheet metal layer (16) has a smaller diameter than in the region of the second sheet metal layer (18).

4. Fastening element according to one of Claims 1 to 3, **characterized in that** the first sheet metal layer (16) is formed in the region of the opening (20) in such a way that the sheet metal layer (16) has an offset (22).

5. Fastening element according to one of Claims 1 to 4, **characterized in that** the second sheet metal layer (18) extends into the receiving region (12).

6. Fastening element according to Claim 5, **characterized in that** the receiving region (12) has at least two folded-down side faces (28), wherein the second sheet metal layer (18) is connected to the side faces (28).

7. Fastening element according to one of Claims 1 to 6, **characterized in that** the second sheet metal layer (18) is connected to the side faces (28) in a form-fitting manner.

8. Fastening element according to one of Claims 1 to 7, **characterized in that** the second sheet metal layer (18) has an aperture (32) for fastening a tensioning element (34).

9. Vehicle having a fastening element (10) for a window-wiping device according to one of Claims 1 to 8.

## Revendications

1. Élément de fixation pour recevoir un bras d'essuie-glace, en particulier pour un dispositif d'essuie-glace d'un véhicule automobile, comprenant une région de réception (12) pour recevoir le bras d'essuie-glace, et une région de connexion (14) pour connecter l'élément de fixation (10) à un arbre (38), la région de connexion (14) présentant une ouverture de forme conique (20) pour recevoir une extrémité d'arbre (36) réalisée sous forme conique, l'ouverture (20) étant réalisée à l'intérieur d'une région formée d'au moins une première couche de tôle (16) et d'au moins une deuxième couche de tôle (18),
**caractérisé en ce que**
l'élément de fixation (10) présente deux surfaces latérales (28), la deuxième couche de tôle (18) étant connectée aux surfaces latérales (28) à la fois dans la région de réception (12) et dans la région de connexion (14).

2. Élément de fixation selon la revendication 1, **caractérisé en ce que** la première couche de tôle (16) et la deuxième couche de tôle (18) sont formées par une tôle cintrée au moins une fois de 180°, la tôle étant cintrée à l'intérieur de la région de connexion (14).

3. Élément de fixation selon la revendication 1 ou 2, **caractérisé en ce que** la première couche de tôle (16) est prévue sur un côté supérieur (24) de l'élément de fixation (10) et la deuxième couche de tôle (18) est prévue sur un côté inférieur (26) de l'élément de fixation (10), l'ouverture (20) dans la région de la première couche de tôle (16) présentant un plus petit diamètre que dans la région de la deuxième couche de tôle (18).

4. Élément de fixation selon l'une quelconque des revendications 1 à 3, **caractérisé en ce que** la première couche de tôle (16) est réalisée dans la région d'ouverture (20) de telle sorte que la couche de tôle (16) présente un déport (22).

5. Élément de fixation selon l'une quelconque des revendications 1 à 4, **caractérisé en ce que** la deuxième couche de tôle (18) s'étend dans la région de réception (12).

6. Élément de fixation selon la revendication 5, **caractérisé en ce que** la région de réception (12) présente au moins deux surfaces latérales coudées (28), la deuxième couche de tôle (18) étant connectée aux surfaces latérales (28).

7. Élément de fixation selon l'une quelconque des revendications 1 à 6, **caractérisé en ce que** la deuxième couche de tôle (18) est connectée par engagement par correspondance de formes aux surfaces latérales (28).

8. Élément de fixation selon l'une quelconque des revendications 1 à 7, **caractérisé en ce que** la deuxième couche de tôle (18) présente un évidement (32) pour la fixation d'un élément de serrage (34).

9. Véhicule comprenant un élément de fixation (10) pour un dispositif d'essuie-glace selon l'une quelconque des revendications 1 à 8.
